# EUROPEAN PATENT SPECIFICATION

(11) **EP 3 975 807 B1**
(45) Date of publication and mention of the grant of the patent: **25.09.2024**
(21) Application number: 20812741.5
(22) Date of filing: 20.05.2020
(51) Int. Cl.: A47J 43/046, F21S 9/03

(54) **A FOOD PROCESSOR CIRCUIT AND A FOOD PROCESSOR**
LEBENSMITTELVERARBEITUNGSSCHALTUNG UND KÜCHENMASCHINE
CIRCUIT DE ROBOT CULINAIRE ET ROBOT CULINAIRE

(30) Priority: 27.05.2019 CN 201910448225; 27.05.2019 CN 201920776176 U
(43) Date of publication of application: 06.04.2022
(73) Proprietor: Zhejiang Shaoxing Supor Domestic Electrical Appliance Co., Ltd., Shaoxing, Zhejiang 312017 (CN)
(72) Inventor: PENG, Yongjun, Shaoxing, Zhejiang 312017 (CN); YI, Shanwen, Shaoxing, Zhejiang 312017 (CN)
(74) Representative: LLR
(86) International application number: PCT/CN2020/091165
(87) International publication number: WO 2020/238711

(56) References cited:
- CN-A- 104 678 840
- CN-A- 106 451 826
- CN-A- 106 955 014
- CN-A- 110 608 406
- CN-U- 202 173 297
- CN-U- 203 369 781
- CN-U- 206 350 692
- CN-U- 210 227 908
- US-A1- 2019 264 971

## Description

### Field of the Invention

The invention relates to the field of small electrical home appliances, and relates in particular to a food processor.

### Background of the Invention

As people's quality of life keeps improving, many different types of food processors appear on the market. The functions of a food processor can mainly include, but are not limited to: making soymilk, juicing, making rice paste, grinding meat, making shaved ice, making coffee, and/or preparing face masks. The bowl assembly of a food processor is provided with certain electrical elements that need to be powered by a power circuit inside the main unit. The power circuit is connected to a coupler on the main unit which is electrically plugged with a coupler of the bowl assembly. The coupler of the bowl assembly is connected with electrical elements of the bowl assembly, so as to provide electrical energy of the power circuit to the electrical elements of the bowl assembly. As a result, the wiring for power supply is complicated. On the other hand, D1 (CN206350692U) discloses a stirring cup comprising a solar panel arranged on the cup cover and capable of providing energy to a battery located in the cup base via a USB cable.

### Summary of the Invention

The application provides a food processor. Disclosed is a food processor circuit comprising: a light source; a main control module connected with the light source and used for controlling the light source to emit light; a solar module used for receiving light emitted by the light source and converting light energy into electrical energy; and, a power receiving circuit connected with the solar module and used for receiving electrical energy generated by the solar module as the electrical energy needed for its operation.

In a preferred embodiment, the main control module is used for controlling the lightening state of the light source so that the solar module generates a corresponding electrical signal to control the power receiving circuit. Thus, the power receiving circuit is controlled by the main control module via the light source and the solar module, the circuit can be simplified.

In a preferred embodiment, the power receiving circuit comprises a sub-control module and a load connected with the sub-control module, the sub-control module comprising a signal receiving port through which the sub-control module is connected with the solar module and being used for controlling the load according to the electrical signal generated by the solar module.

For example, the load may be an indicator light circuit and/or a vacuum creating device.

In a preferred embodiment, a capacitor is connected in series between the signal receiving port of the sub-control module and the solar module.

In a preferred embodiment, the power receiving circuit comprises a sub-control module and a detection circuit connected with the sub-control module, the food processor circuit comprising a first optical communication module connected with the main control module and a second optical communication module connected with the sub-control module, the sub-control module being used for capturing a detection signal of the detection circuit and sending the detection signal to the main control module through the first optical communication module and the second optical communication module. Thus, the detection signal of the detection circuit being transmitted to the main control module through an optical signal, the detection circuit does not need to be electrically connected to the main unit, so there is no need to provide an isolated power circuit, simplifying the power design. The cost of the power board may be reduced by reducing the area of the power board.

In a preferred embodiment, the solar module comprises an output terminal used for outputting electrical energy and connected with the power receiving circuit, the food processor circuit comprises an energy storage unit connected in parallel with the output terminal of the solar module, the energy storage unit being connected between the output terminal of the solar module and the power receiving circuit.

In a preferred embodiment, the food processor circuit comprises a unidirectional conduction unit connected in series between the solar module and the energy storage unit and having a conduction direction that is consistent with the direction of the current supplied by the solar module to the power receiving circuit.

The light source may be a light-emitting diode and/or a tungsten lamp.

According to the invention it is provided a food processor comprising: a main unit; a bowl assembly capable of being assembled to the main unit; and, the above described food processor circuit. In a preferred embodiment, the light source and the main control module are provided in the main unit while the solar module and the power receiving circuit are provided in the bowl assembly.

In an embodiment, a lens is arranged between the light source and the solar module. The lens may change the optical path of the light emitted by the light source and thus allows a more flexible design of the food processor circuit. For example, the lens may be a convex lens, so as to enlarge the area of receiving surface of the solar module. In an embodiment, the lens and the light source are independently and separately provided, and the lens is mounted at the bottom of the bowl assembly and/or at the top of the main unit. In this way, the lens can be placed according to the space of the bowl assembly and the main unit. In some other embodiments, the lens and the light source are fixed together and assembled together at the top of the main unit. The mounting is simplified.

In an embodiment, the position of the solar module is biased to one side of the light source and the lens is arranged to change the direction of the light emitted by the light source to arrive at the light receiving surface of the solar module.

The food processor of the invention comprises a light source and a solar module, and powers a power receiving circuit by the solar module's conversion of light energy into electrical energy, which can reduce the wiring for power supply and simplify wiring layout.

### Description of the Drawings

Figure 1 shows a structural schematic view of an embodiment of the food processor of the application;
Figure 2 shows a modular block diagram of an embodiment of the food processor circuit of the application;
Figure 3 shows a modular block diagram of another embodiment of the food processor circuit of the application;
Figure 4 shows a longitudinal section view of an embodiment of the food processor of the application;
Figure 5 shows a partial enlarged view of the food processor shown in Figure 4;
Figure 6 shows a schematic view of another embodiment of the food processor circuit of the application;
Figure 7 shows a schematic view of another embodiment of the food processor circuit of the application;
Figure 8 shows a schematic view of another embodiment of the food processor circuit of the application.

### Detailed Description of the Invention

Exemplary embodiments, which are illustrated in the accompanying drawings, will be described in detail here. In the description below related to figures, unless otherwise indicated, the same numbers in different figures refer to the same or similar elements. The modes of realization described in the following exemplary embodiments do not represent all modes of realization in accordance with the invention. Instead, they are merely examples of devices in accordance with some aspects of the invention as described in detail in the appended claims.

The terms used in the application are merely for the purpose of describing specific embodiments, and not intended to be limiting. Unless otherwise defined, the technical terms or scientific terms used in the application shall be used in their ordinary meaning as understood by a person of ordinary skills in the art to which the invention belongs. The words "First," "second," and similar terms used in the description and claims of the application do not represent any order, quantity, or importance, but are only used to distinguish different components. Similarly, words such as "one" or "a" do not denote a quantity limitation but mean that there is at least one. "Multiple" or "several" means two or more. Words such as "comprise," or "include" are intended to mean that the element or item before "comprise" or "include" covers the element or item listed after "comprise" or "include" and its equivalent, without excluding other elements or items. Words such as "connect" or "connected" are not limited to physical or mechanical connections, and may include electrical connections, whether direct or indirect. Unless otherwise indicated, words such as "front," "back," "bottom," and/or "top" are used for the convenience of description and are not limited to one location or one spatial orientation. It should also be understood that the term "and/or" used herein means and includes any and all possible combinations of one or more of the associated listed items.

The food processor of the invention comprises a light source, a main control module, a solar module, and a power receiving circuit. The main control module is connected with the light source and controls the light source to emit light. The solar module receives light emit by the light source, and converts light energy into electrical energy. The power receiving circuit is connected with the solar module and receives electrical energy of the solar module as the electrical energy needed for its operation. The food processor circuit comprises a light source and a solar module which powers a power receiving circuit by the solar module's conversion of light energy into electrical energy, which can reduce the wiring for power supply and simplify wiring layout.

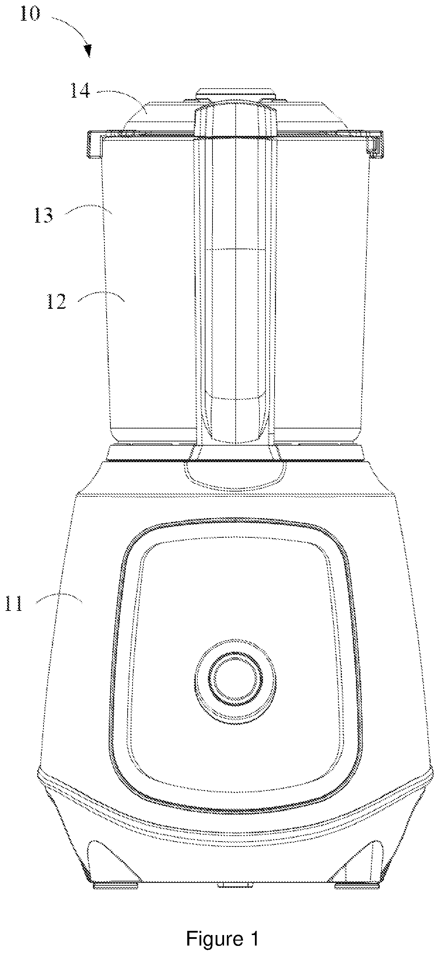

Figure 1 shows a structural schematic view of an embodiment of the food processor 10. The food processor 10 comprises a main unit 11 and a bowl assembly 12 capable of being assembled to the main unit 11. The food processor 10 can be, for example, a cell wall breaking food processor, a soymilk machine, a blender, a juicer, a baby food maker, etc. The bowl assembly 12 can comprise a bowl body assembly 13 and a bowl cover assembly 14 capable of covering the bowl body assembly 13.

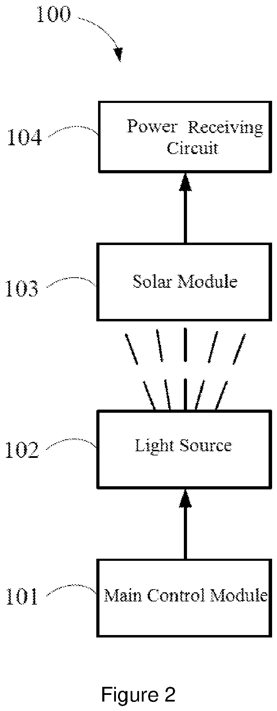

Figure 2 shows a modular block diagram of an embodiment of the food processor circuit 100. The food processor 10 comprises a food processor circuit 100. The food processor circuit 100 comprises a light source 102, a main control module 101, a solar module 103, and a power receiving module 104.

The light source 102 can emit visible light. In some embodiments, the light source 102 comprises a light-emitting diode. Light-emitting diodes have low consumption, simple controlling and driving circuits, and a small volume. In other embodiments, the light source 102 comprises a tungsten lamp. The main control module 101 is connected with the light source 102 and used for controlling the light source 102 to emit light. The main control module 101 can comprise a control chip, such as a single chip microcomputer.

The solar module 103 is used to receive light emitted by the light source 102 and convert light energy into electrical energy. The solar module 103 comprises a solar panel. The solar module 103 can output direct current. The solar module 103 can be selected according to the actual application to output the voltage needed, such as a voltage of 9V, 12V, or 5V. In some embodiments, a lens can be placed between the light source 102 and the solar module 103. The light emitted by the light source 102 can irradiate on the solar module 103 after passing through the lens, which can amplify the light intensity or enlarge the area of the solar module 103 irradiated by light.

The power receiving circuit 104 is connected with the solar module 103 and used for receiving electrical energy of the solar module 103 as the electrical energy needed for its operation. The solar module 103 can supply power to the power receiving circuit 104. The power receiving circuit 104 is a circuit that needs electrical energy to operate. By means of the solar module 103 converting light energy to electrical energy, the food processor circuit 100 supplies power to the power receiving circuit 104, which can reduce the wiring for power supply and simplify the layout of the wiring.

In some embodiments, with reference to Figure 1, the main control module 101 and the light source 102 are provided on the main unit 11, while the solar module 103 and the power receiving circuit 104 are provided on the bowl assembly 12. Thus, the wiring for power supply between the main unit 11 and the bowl assembly 12 can be simplified. The coupler of the main unit 11 and the coupler of the bowl assembly 12 can have a reduced number of conducting pins, or can be omitted. In another embodiment, the solar module 103 can be provided in the main unit 11 and connected with the power receiving circuit 104 to supply power to it via the coupler of the main unit 11 and the coupler of the bowl assembly 12. In some embodiments, the solar module 103 can also supply power to a circuit of the main unit 11, for example, to a display module of the main unit 11.

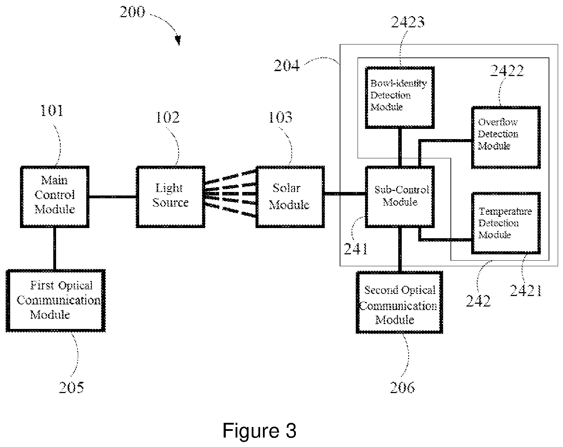

Figure 3 shows a modular block diagram of another embodiment of the food processor circuit 200. The food processor circuit 200 is similar to the food processor circuit 100 shown in Figure 2. Compared to the food processor circuit 100 shown in Figure 2, the power receiving circuit 204 of the food processor circuit 200 shown in Figure 3 comprises a sub-control module 241 and a detection circuit 242 connected with the sub-control module 241. The food processor circuit 200 comprises a first optical communication module 205 connected with the main control module 101 and a second optical communication module 206 connected with the sub-control module 241. The sub-control module 241 is used to capture a detection signal of the detection circuit 242, and sends the detection signal to the main control module 101 via the first optical communication module 205 and the second optical communication module 206.

The solar module 103 is connected with the sub-control module 241 to supply power to the sub-control module 241 and provide the electrical energy needed for the sub-control module 241 to operate. The sub-control module 241 can comprise a control chip, such as a single chip microcomputer, and the solar module 103 can supply power to the control chip.

In some embodiments, the detection circuit 242 can comprise a temperature detection module 2421 used for detecting the temperature of a food material inside the bowl assembly of the food processor. The temperature detection module 2421 can comprise a temperature sensor. In an embodiment, the temperature sensor comprises a thermistor, such as a Negative Temperature Coefficient (NTC) thermistor.

In some embodiments, the detection circuit 242 comprises an overflow detection module 2422 comprising an overflow probe used for generating an electrical signal when a food material is heated and the level of a liquid rises to the overflow probe. The main control module 101 controls a heating means to stop heating based on the electrical signal, and thus prevents the food material from overflowing.

In some embodiments, the detection circuit 242 comprises a bowl-identity detection module 2423 that is used for detecting different types of bowl body assembly or bowl cover assembly. The food processor can comprise a plurality of replaceable bowl body assemblies that can be assembled to the main unit, and/or a plurality of replaceable bowl cover assemblies that can be assembled to the same bowl body assembly. Different bowl body assemblies or different bowl cover assemblies can be provided with different bowl-identity detection modules 2423 to generate different electrical signals. The main control module 101 can identify the bowl body assembly or the bowl cover assembly based on the different electrical signals, and thus control the food processor to execute different functions. In some other embodiments, the detection circuit 242 can comprise other detection modules.

The sub-control module 241 captures the detection signal of the detection circuit 242, and sends the detection signal to the second optical communication module 206. The second optical communication module 206 and the first optical communication module 205 perform an optical communication. The second optical communication module 206 converts the detection signal into a corresponding optical signal. The first optical communication module 205 receives the optical signal, converts it into an electrical signal, and provides the electrical signal to the main control module 101. As such, the main control module 101 obtains an electrical signal corresponding to the detection signal, and generates a control signal based on the electrical signal, for example, a control signal controlling the rotation speed of an electric motor, or a control signal controlling a heating means to perform heating or stop heating.

In some embodiments, the second optical communication module 206 comprises a transmitter used for converting an electrical signal into an optical signal and emitting the optical signal. The first optical communication module 205 comprises a receiver corresponding to the transmitter and used for receiving an optical signal and converting the optical signal into an electrical signal. In some other embodiments, the first optical communication module 205 and the second optical communication module 206 can both comprise a receiver and a transmitter, and can emit an optical signal and receive an optical signal.

In some embodiments, the first optical communication module 205 and the second optical communication module 206 can comprise an infrared communication module that performs communication by means of infrared signals. In some other embodiments, the first optical communication module 205 and the second optical communication module 206 can comprise a visible optical communication module using visible lights to perform communication or other types of optical communication module.

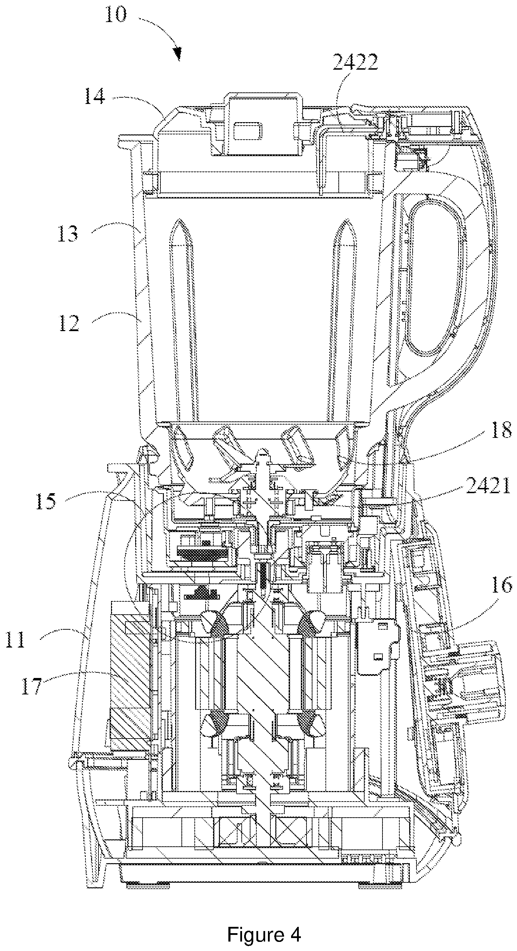

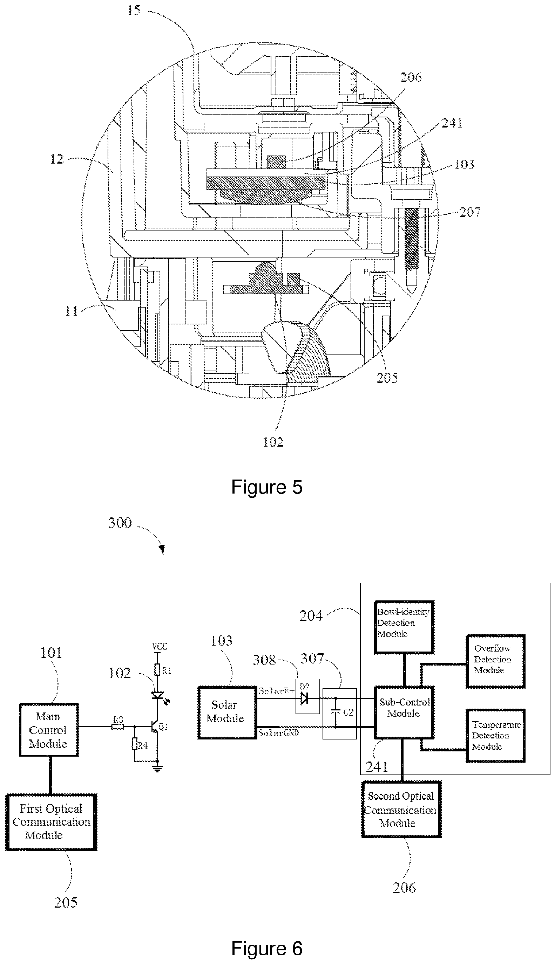

Figure 4 shows a longitudinal sectional view of an embodiment of the food processor 10. Figure 5 shows an enlarged view of the partial region 15 shown in Figure 14. The food processor 10 comprises the food processor circuit 200 shown in Figure 3. With reference to Figure 3 to Figure 5, the main unit 11 comprises an operation board 16 and a power board 17. The operation board 16 can be arranged on the face of the main unit 11 facing the user and operated by the user. The power board 17 can be connected to an external power source, such as plugged with a mains supply, and converts a voltage input from the external power source into the voltage required for the main unit 11 to work and can supply power to the main control module 101. The power board 17 can comprise a switchable power source that can output the working voltage required by the main control module 101. In some embodiments, the main control module 101 is arranged on the operation board 16 or the power board 17.

The detection circuit 242 is provided in bowl assembly 12. In the relevant art, the detection circuit 242 is connected to the main unit 11 via a coupler. For safety reasons, a power supply circuit isolated from the external power source is needed for its power supply. In some embodiments of the invention, the detection signal of the detection circuit 242 is transmitted to the main control module 101 by means of an optical signal. Thus the detection circuit is not electrically connected with the main unit 11, and there is no need to provide an isolated power supply circuit, which simplifies power supply design and reduces the area of the power board 17, thereby reducing the cost of the power board 17. In an embodiment, the temperature detection module 2421 of the detection circuit 242 is assembled to a bottom plate 18 of the bowl body assembly 13. In an embodiment, the overflow detection module 2422 of the detection circuit 242 can be provided in the bowl cover assembly 14.

The light source 102 can be provided at a top part of the main unit 11 and emits light towards the outside of the main unit 11. The first optical communication module 205 is provided at the main unit 11 and can be provided at a top part of the main unit 11. In an embodiment, the first optical communication module 205 is fixed to the light source 102.

In an embodiment, the solar module 103 is provided at a bottom part of the bowl assembly 12. The solar module 103 may be provided opposite to the light source 102. In some embodiments, a lens 207 can be provided between the light source 102 and the solar module 103. The lens 207 can increase the receiving area or the intensity of the light emitted by the light source 102. In an embodiment, the lens 207 is located in the bowl assembly 12, and can be positioned on the side of the solar module 103 that receives light. In another embodiment, the lens 207 can be provided in the main unit 11. In an embodiment, the lens 207 can be separated from the light source 102. In another embodiment, the lens 207 can be assembled with the light source 102. In some embodiments, one or multiple lens 207 can be provided. In some embodiments, the position of the solar module 103 is biased to one side of the light source 102 and/or the light receiving face of the solar module 103 is inclined relative to the optical axis of the light emitted by the light source 102, and the lens 207 can change the direction of light so that the light emitted by the light source 102 passes through the lens 207 and irradiates on the light receiving face of the solar module 103. Thus, the solar module 103 can be positioned according to the structure and internal space of the bowl assembly 12, making the design more flexible and making full use of the space of the bowl assembly 12. In addition, a solar module 103 with a relatively large area can be provided as needed, so as to generate more electrical energy.

In some embodiments, the sub-control module 241 is provided in the bowl assembly 12. The sub-control module 241 can be provided at the side opposite the light receiving face of the solar module 103. In an embodiment, the sub-control module 241 can be provided independently from the solar module 103. In another embodiment, the sub-control module 241 can be integrated in the solar module 103. The solar module 103 can comprise an integrated circuit, and the sub-control module 241 can be integrated in the integrated circuit. In some embodiments, the second optical communication module 206 is provided in the bowl assembly 12. In an embodiment, the second optical communication module 206 can be provided at the side of the sub-control module 241 facing away from the solar module 103.

Figure 6 is a schematic view of another embodiment of the food processor circuit 300.

The food processor circuit 300 shown in Figure 6 is similar to the food processor circuit 200 shown in Figure 3. Compared to the food processor circuit shown in Figure 3, the solar module 103 of the food processor circuit 300 shown in Figure 6 comprises output terminals SolarE+ and SolarGND used for outputting electrical energy and connected with the power receiving circuit 204. The food processor circuit 300 comprises an energy storage unit 307 connected in parallel with the output terminals SolarE+ and SolarGND of the solar module 103. The energy storage unit 307 is connected between the output terminals SolarE+ and SolarGND of the solar module 103 and the power receiving circuit 204. The energy storage unit 307 can store electrical energy output by the solar module 103, and provide electrical energy to the power receiving circuit 204. Thus, the power receiving circuit 204 can be constantly powered, thus ensuring the stability of power supply and providing a stable voltage.

In an embodiment, the energy storage unit 307 is connected between the solar module 103 and the sub-control module 241 and supplies power to the sub-control module 241. In some embodiments, the energy storage unit 307 comprises an energy storage capacitor C2 connected between the output terminals SolarE+ and SolarGND of the solar module 103. The energy storage capacitor C2 can be an electrolytic capacitor. When outputting electrical energy, the solar module 103 can supply power to the power receiving circuit 204, and charge the energy storage capacitor C2. When the light received by the solar module 103 is reduced and the output voltage drops, or when no voltage is output, the energy storage capacitor C2 can discharge and supply power to the sub-control module 241. Thus, a stable voltage can be constantly provided to the sub-control module 241. The energy storage capacitor C2 also performs a filtering function. In some other embodiments, the energy storage unit 307 can also comprise other elements.

The food processor circuit 300 comprises a unidirectional conduction unit 308 connected in series between the solar module 103 and the energy storage unit 307, and has a conduction direction consistent with the direction of the current of power supplied by the solar module 103 to the power receiving circuit 204. In one embodiment, the unidirectional conduction unit 308 is connected in series between the positive output terminal SolarE+ of the solar module 103 and the energy storage unit 307, with a conduction direction oriented from the solar module 103 towards the energy storage unit 307. The current output by the solar module 103 can flow through the unidirectional conduction unit 308 and into the power receiving circuit 204. The unidirectional conduction unit 308 can prevent the current from flowing backwards when the voltage drops caused by the weakening of light on the solar module 103 and thus prevent the energy storage unit 307 from discharging towards the solar module 103.

In some embodiments, the unidirectional conduction unit 308 comprises a diode D2, the positive pole of which is connected to the positive output terminal SolarE+ of the solar module 103 and the negative pole is connected to the power receiving circuit 204. In an embodiment, the negative pole of the diode D2 is connected to the sub-control module 241.

In the embodiment shown in Figure 6, the food processor circuit 300 comprises a drive transistor Q1 connected with the main control module 101 and the light course 102. The light source 102 can be a LED, and the drive transistor Q1 can be a triode or a MOS tube. The main control module 101 controls the lightening state of the light source 102 by controlling the drive transistor Q1. In an embodiment, the drive transistor Q1 is a NPN-type transistor, with the base connected to the main control module 101, the collector connected with the negative pole of the LED, and the emitter grounded. A current limiting resistor R3 is connected in series between the base of the drive transistor Q1 and the main control module 101, and the base is grounded via a pull-down resistor R4. The positive pole of the LED is connected with a DC power source terminal VCC via a pull-up resistor R1. When the main control module 101 outputs high level, the drive transistor Q1 allows a current to pass to the light source 102, which thus emits light. When the main control module 101 outputs low level, the drive transistor Q1 is cut off, and no current passes to the light source 102, which thus does not emit light.

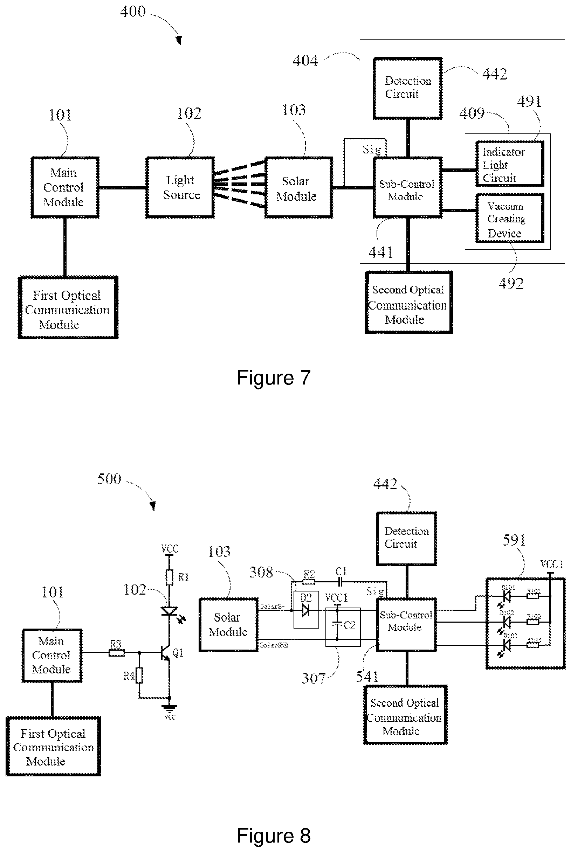

Figure 7 shows a schematic view of another embodiment of the food processor circuit 400. The food processor circuit 400 shown in Figure 7 is similar to the food processor circuit 200 shown in Figure 3. Compared to the food processor circuit shown in Figure 3, the main control module 101 of the food processor circuit 400 shown in Figure 7 is used to control the lightening state of the light source 102, so that the solar module 103 generates a corresponding electrical signal to control the power receiving circuit 404. The main control module 101 transmits control information by means of the turning on and off of the light source 102. The solar module 103 generates different electrical signals under different levels/modes of light. The electrical signals embody control information so as to control the power receiving circuit 404. The changing rule of the electrical signal generated by the solar module 103 is consistent with the turning on and off of the light source 102. The control of the power receiving circuit 404 by the main control module 101 is realized by means of the light source 102 and the solar module 103, thus the wiring can be simplified. Power supply and control can both be achieved by means of the light source 102 and the solar module 103. Thus, the circuit can be simplified and cost can be saved.

In some embodiments, the power receiving circuit 404 comprises a sub-control module 441 and a load 409 connected with the sub-control module 441. The sub-control module 441 comprises a signal receiving port Sig via which the sub-control module 441 is connected with the solar module 103. The sub-control module is used to control the load 409 according to the electrical signal generated by the solar module 103. The solar module 103 generates a corresponding electrical signal according to the state of turning on and off of the light source 102 and provides it to the sub-control module 441. The sub-control module 441 generates a corresponding control signal according to the electrical signal of the solar module 103 to control the load 409. Thus, the control of the load 409 can be achieved.

In an embodiment, the main control module 101 controls the light source 102 to turn on, indicating one control signal among a high level and a low level. The main control 101 controlling the light source 102 to turn off indicates the other control signal among a high level and a low level. The sub-control module 441 can generate a control signal corresponding to a level so as to control the load 409. Thus, control is achieved by the turning on and off of the light source 102 indicating respectively the control signal of different levels. The control signal can include several bits, each of which can be represented by "0" or "1." "0" can indicate a low level, and "1" can indicate a high level. For a one-bit control signal, the duration of turning on of the light source 102 is longer than 0, and the range of the duration of turning off is 1ms to 100ms (including the boundary values).

In another embodiment, the main control module 101 controls the light source 102 to turn on during a first duration and then turn off during a second duration, indicating one control signal among a high level and a low level. For example, the first duration can be 1ms, and the second duration can be 2ms. The main control module 101 controls the light source 102 to turn on during the second duration and then turn off during the first duration, indicating the other control signal among a high level and a low level. Thus, a more accurate control is achieved by the different combinations of turning on and off of the light source 102 indicating different control signals. In other examples, the combinations of turning on and off of the light source 102 can be different than the above-described example.

In another embodiment, the main control module 101 controls the light source 102 to change from being turned on to being turned off, indicating one control signal among a high level and a low level. The main control module 101 controls the light source 102 to change from being turned off to being turned on, indicating the other control signal among a high level and a low level. Thus, control is achieved by different changes of being turned on and off of the light source 102 indicating different control signals.

In some other embodiments, control can be achieved by different forms of the states of being turned on and off of the light source 102 indicating control signals.

In the embodiment shown in Figure 7, the load 409 comprises an indicator light circuit 491 and a vacuum creating device 492. The indicator light circuit 491 can be used to indicate the operation state of the food processor, such as beginning to process food and termination of processing. The vacuum creating device 492 can be used to create vacuum inside the bowl assembly to keep food materials fresh and prevent them from being oxidized. The load 409 may be provided in the bowl assembly. The indicator light circuit 491 may be provided in the bowl body assembly and/or the bowl cover assembly. The vacuum creating device 492 can be provided in the bowl cover assembly. In some other embodiments, the indicator light circuit 491 or the vacuum creating device 492 can be omitted. In some other embodiments, the load 409 can comprise other elements.

In some embodiments, the load 409 may be connected to the solar module 103, which supplies power to the load 409.

The detection circuit 442 shown in Figure 7 can be similar to the detection circuit 242 shown in Figure 3, and comprises a jug-identifying detection module, an anti-overflow detection module, and a temperature detection module (not shown in Figure 7).

Figure 8 shows a schematic view of another embodiment of the food processor circuit 500. The food processor circuit 500 shown in Figure 8 is similar to the food processor circuit 400 shown in Figure 7. Compared to the food processor circuit 400 shown in Figure 7, the load of the food processor circuit 500 shown in Figure 8 comprises an indicator light circuit 591, which comprises a light-emitting diode D101-103. The indicator light circuit 591 may comprise one or more light-emitting diodes D101-103. In an embodiment, the indicator light circuit 591 may comprise a plurality of light-emitting diodes D101-103 of different colors. The plurality of light-emitting diodes D101-103 may be connected to different ports of a sub-control module 541. The sub-control module 541 controls the turning on and off of the light-emitting diodes D101-103.

In an embodiment, the indicator light circuit 591 is connected to the solar module 103, which powers the indicator light circuit 591. In an embodiment, the negative pole of the light-emitting diode D101-103 is connected to the sub-control module 541, and the positive pole is connected to the positive output terminal SolarE+ of the solar module 103 via a resistor R101-R103. When the sub-control module 541 outputs a low level, the light-emitting diode D101-103 allows current to pass through and emits light. When the sub-control module 541 outputs a high level, the light-emitting diode D101-103 is cut off and does not emit light.

In the embodiment shown in Figure 8, a capacitor C1 is connected in series between a signal receiving port Sig of the sub-control module 541 and the solar module 103. The capacitor C1 can absorb a peak voltage of the voltage output by the solar module 103, so as to smooth out the voltage output to the signal receiving port Sig of the sub-control module 541. Thus, the signals of high and low level received by the sub-control module 541 are clearer, reducing the probability of erroneous identification of high and low levels and increasing control accuracy. The capacitor C1 is connected in series between the positive output terminal SolarE+ of the solar module 103 and the signal receiving port Sig of the sub-control module 541.

In an embodiment, the capacitor C1 is connected in series with a current limiting resistor R1. The current limiting resistor R1 is connected in series between the signal receiving port Sig of the sub-control module 541 and the solar module 103. It can be used to limit current, preventing the current output by the solar module 103 from being excessive.

In an embodiment, the food processor circuit 500 comprises a unidirectional conduction unit 308. The capacitor C1 is connected between the unidirectional conduction unit 308 and the solar module 103. The current limiting resistor R1 is connected between the unidirectional conduction unit 308 and the solar module 103. The unidirectional conduction unit 308 can prevent current from reversing direction when the voltage of the solar module 103 is low, which would cause the level detected at the signal receiving port Sig of the sub-control module 541 to be abnormal and result in a control error.

What have been described above are merely preferred embodiments of the application, and not for the purpose of limiting the application.

## Claims

1. A food processor, **characterized in that**, it comprises:
- a main unit (11);
- a bowl assembly (12) capable of being assembled to the main unit (11); and, **characterized in that** it further comprises a a food processor circuit comprising:
- a light source (102),
- a main control module (101) connected with the light source (102) and used for controlling the light source (102) to emit light;
- a solar module (103) used for receiving light emit by the light source (102) and converting light energy into electrical energy; and,
- a power receiving circuit (104) connected with the solar module (103) and used for receiving electrical energy generated by the solar module (103) as the electrical energy needed for its operation.

2. The food processor of claim 1, **characterized in that** the light source (102) and the main control module (101) are provided in the main unit (11), the solar module (103) and the power receiving circuit (104) are provided in the bowl assembly (12).

3. The food processor of claim 1 or 2, **characterized in that** the main control module (101) is used for controlling the lightening state of the light source (102) so that the solar module (103) generates a corresponding electrical signal to control the power receiving circuit (104).

4. The food processor of any one of claims 1 to 3, **characterized in that** the power receiving circuit (104) comprises a sub-control module (441) and a load (409) connected with the sub-control module (441), the sub-control module (441) comprising a signal receiving port through which the sub-control module (441) is connected with the solar module (103) and being used for controlling the load (409) according to the electrical signal generated by the solar module (103).

5. The food processor of claim 4, **characterized in that** the load (409) comprises an indicator light circuit (491) and/or a vacuum creating device (492).

6. The food processor circuit of claim 4 or 5, **characterized in that** a capacitor (C1) is connected in series between the signal receiving port of the sub-control module and the solar module (103).

7. The food processor of any one of claims 1 to 6, **characterized in that** the power receiving circuit (104) comprises a sub-control module (241) and a detection circuit (242) connected with the sub-control module (241), a first optical communication module (205) being connected with the main control module (101) and a second optical communication module (206) being connected with the sub-control module (241), the sub-control module (241) being used for capturing a detection signal of the detection circuit (242) and sending the detection signal to the main control module (101) through the first optical communication module (205) and the second optical communication module (206).

8. The food processor of any one of claims 1 to 7, **characterized in that** the solar module (103) comprises an output terminal used for outputting electrical energy and connected with the power receiving circuit (104), an energy storage unit (307) being connected in parallel with the output terminal of the solar module (103), the energy storage unit (307) being connected between the output terminal of the solar module (103) and the power receiving circuit (104).

9. The food processor of claim 8, **characterized in that** a unidirectional conduction unit (308) is connected in series between the solar module (103) and the energy storage unit (307) and having a conduction direction that is consistent with the direction of the current supplied by the solar module (103) to the power receiving circuit (104).

10. The food processor of any one of claims 1 to 9, **characterized in that**, the light source (102) comprises a light-emitting diode and/or a tungsten lamp.

11. The food processor of any one of claims 1 to 10, **characterized in that** the main unit (11) includes a plug for connection to an external power source.

12. The food processor of any one of claims 1 to 11, **characterized in that**, a lens (207) is arranged between the light source (102) and the solar module (103).

13. The food processor of claim 12, **characterized in that**, the lens (207) and the light source (102) are independently and separately provided, and the lens (207) is mounted at the bottom of the bowl assembly (12) and/or at the top of the main unit (11); or the lens (207) and the light source (102) are fixed together and assembled together at the top of the main unit (11).

14. The food processor of claim 12 or 13, **characterized in that**, the lens (207) includes a convex lens.

15. The food processor of any one of claims 12 to 14, **characterized in that**, the position of the solar module (103) is biased to one side of the light source (102) and the lens (207) is arranged to change the direction of the light emitted by the light source (102) to arrive at the light receiving surface of the solar module (103).

## Patentansprüche

1. Küchenmaschine, **dadurch gekennzeichnet, dass** sie aufweist:
- eine Haupteinheit (11);
- eine Schalenanordnung (12), die mit der Haupteinheit (11) zusammengebaut werden kann; und,
**dadurch gekennzeichnet, dass** sie ferner eine Küchenmaschinenschaltung aufweist, die Folgendes aufweist:
- eine Lichtquelle (102),
- ein Hauptsteuermodul (101), das mit der Lichtquelle (102) verbunden ist und dazu dient, die Lichtquelle (102) so zu steuern, dass sie Licht aussendet;
- ein Solarmodul (103), das dazu dient, von der Lichtquelle (102) emittiertes Licht zu empfangen und Lichtenergie in elektrische Energie umzuwandeln; und,
- eine Energieempfangsschaltung (104), die mit dem Solarmodul (103) verbunden ist und dazu dient, die vom Solarmodul (103) erzeugte elektrische Energie als die für seinen Betrieb benötigte elektrische Energie zu empfangen.

2. Küchenmaschine nach Anspruch 1, **dadurch gekennzeichnet, dass** die Lichtquelle (102) und das Hauptsteuermodul (101) in der Haupteinheit (11) vorgesehen sind, das Solarmodul (103) und die Energieempfangsschaltung (104) in der Schalenanordnung (12) vorgesehen sind.

3. Küchenmaschine nach Anspruch 1 oder 2, **dadurch gekennzeichnet, dass** das Hauptsteuermodul (101) zur Steuerung des Beleuchtungszustands der Lichtquelle (102) verwendet wird, so dass das Solarmodul (103) ein entsprechendes elektrisches Signal zur Steuerung der Energieempfangsschaltung (104) erzeugt.

4. Küchenmaschine nach einem der Ansprüche 1 bis 3, **dadurch gekennzeichnet, dass** die Energieempfangsschaltung (104) ein Untersteuermodul (441) und eine mit dem Untersteuermodul (441) verbundene Last (409) aufweist, wobei das Untersteuermodul (441) einen Signalempfangsanschluss aufweist, über den das Untersteuermodul (441) mit dem Solarmodul (103) verbunden ist und zur Steuerung der Last (409) in Abhängigkeit von dem durch das Solarmodul (103) erzeugten elektrischen Signal verwendet wird.

5. Küchenmaschine nach Anspruch 4, **dadurch gekennzeichnet, dass** die Last (409) eine Anzeigelichtschaltung (491) und/oder eine vakuumerzeugende Vorrichtung (492) aufweist.

6. Küchenmaschine nach Anspruch 4 oder 5, **dadurch gekennzeichnet, dass** ein Kondensator (C1) in Reihe zwischen den Signalempfangsanschluss des Untersteuermoduls und das Solarmodul (103) geschaltet ist.

7. Küchenmaschine nach einem der Ansprüche 1 bis 6, **dadurch gekennzeichnet, dass** die Energieempfangsschaltung (104) ein Untersteuermodul (241) und eine mit dem Untersteuermodul (241) verbundene Detektionsschaltung (242) aufweist, wobei ein erstes optisches Kommunikationsmodul (205) mit dem Hauptsteuermodul (101) und ein zweites optisches Kommunikationsmodul (206) mit dem Untersteuermodul (241) verbunden ist, wobei das Untersteuermodul (241) zum Erfassen eines Erfassungssignals der Detektionsschaltung (242) und zum Senden des Erfassungssignals an das Hauptsteuermodul (101) über das erste optische Kommunikationsmodul (205) und das zweite optische Kommunikationsmodul (206) verwendet wird.

8. Küchenmaschine nach einem der Ansprüche 1 bis 7, **dadurch gekennzeichnet, dass** das Solarmodul (103) einen Ausgangsanschluss aufweist, der zur Abgabe von elektrischer Energie dient und mit der Energieempfangsschaltung (104) verbunden ist, wobei eine Energiespeichereinheit (307) parallel zum Ausgangsanschluss des Solarmoduls (103) geschaltet ist, wobei die Energiespeichereinheit (307) zwischen dem Ausgangsanschluss des Solarmoduls (103) und der Energieempfangsschaltung (104) angeschlossen ist.

9. Küchenmaschine nach Anspruch 8, **dadurch gekennzeichnet, dass** eine unidirektionale Leitungseinheit (308) zwischen dem Solarmodul (103) und der Energiespeichereinheit (307) in Reihe geschaltet ist und eine Leitungsrichtung aufweist, die mit der Richtung des vom Solarmodul (103) an die Energieempfangsschaltung (104) gelieferten Stroms übereinstimmt.

10. Küchenmaschine nach einem der Ansprüche 1 bis 9, **dadurch gekennzeichnet, dass** die Lichtquelle (102) eine Leuchtdiode und/oder eine Wolframlampe aufweist.

11. Küchenmaschine nach einem der Ansprüche 1 bis 10, **dadurch gekennzeichnet, dass** die Haupteinheit (11) einen Stecker zum Anschluss an eine externe Stromquelle aufweist.

12. Küchenmaschine nach einem der Ansprüche 1 bis 11, **dadurch gekennzeichnet, dass** zwischen der Lichtquelle (102) und dem Solarmodul (103) eine Linse (207) angeordnet ist.

13. Küchenmaschine nach Anspruch 12, **dadurch gekennzeichnet, dass** die Linse (207) und die Lichtquelle (102) unabhängig und getrennt voneinander vorgesehen sind und die Linse (207) an der Unterseite der Schalenanordnung (12) und/oder an der Oberseite der Haupteinheit (11) angebracht ist; oder die Linse (207) und die Lichtquelle (102) zusammen befestigt und an der Oberseite der Haupteinheit (11) zusammengebaut sind.

14. Küchenmaschine nach Anspruch 12 oder 13, **dadurch gekennzeichnet, dass** die Linse (207) eine konvexe Linse aufweist.

15. Küchenmaschine nach einem der Ansprüche 12 bis 14, **dadurch gekennzeichnet, dass** die Position des Solarmoduls (103) zu einer Seite der Lichtquelle (102) hin ausgerichtet ist und die Linse (207) so angeordnet ist, dass sie die Richtung des von der Lichtquelle (102) emittierten Lichts ändert, damit es auf die Lichtempfangsfläche des Solarmoduls (103) trifft.

## Revendications

1. Un robot culinaire, **caractérisé en ce qu'**il comprend :
- une unité principale (11) ;
- un ensemble bol (12) apte à être assemblé à l'unité principale (11) ; et
**caractérisé en ce qu'**il comprend en outre un circuit de robot culinaire comprenant :
- une source lumineuse (102),
- un module de commande principal (101) connecté à la source lumineuse (102) et utilisé pour commander à la source lumineuse (102) d'émettre de la lumière ;
- un module solaire (103) utilisé pour recevoir la lumière émise par la source lumineuse (102) et pour convertir l'énergie lumineuse en énergie électrique ;
et
- un circuit (104) de réception d'énergie, connecté au module solaire (103) et utilisé pour recevoir l'énergie électrique générée par le module solaire (103) en tant qu'énergie électrique nécessaire à son fonctionnement.

2. Le robot culinaire selon la revendication 1, **caractérisé en ce que** la source lumineuse (102) et le module de commande principal (101) sont prévus dans l'unité principale (11), le module solaire (103) et le circuit (104) de réception d'énergie sont prévus dans l'ensemble bol (12).

3. Le robot culinaire selon la revendication 1 ou la revendication 2, **caractérisé en ce que** le module de commande principal (101) est utilisé pour commander l'état d'éclairage de la source lumineuse (102) de sorte que le module solaire (103) génère un signal électrique correspondant pour commander le circuit (104) de réception d'énergie.

4. Le robot culinaire selon l'une quelconque des revendications 1 à 3, **caractérisé en ce que** le circuit (104) de réception d'énergie comprend un module de sous-commande (441) et une charge (409) connectée au module de sous-commande (441), le module de sous-commande (441) comprenant un port de réception de signal par lequel le module de sous-commande (441) est connecté au module solaire (103) et sert à commander la charge (409) en fonction du signal électrique généré par le module solaire (103).

5. Le robot culinaire selon la revendication 4, **caractérisé en ce que** la charge (409) comprend un circuit lumineux indicateur (491) et/ou un dispositif (492) de création de vide.

6. Le circuit de robot culinaire selon la revendication 4 ou la revendication 5, **caractérisé en ce qu'**un condensateur (C1) est connecté en série entre le port de réception de signal du module de sous-commande et le module solaire (103).

7. Le robot culinaire selon l'une quelconque des revendications 1 à 6, **caractérisé en ce que** le circuit (104) de réception d'énergie comprend un sous-module de commande (241) et un circuit de détection (242) connecté au sous-module de commande (241), un premier module (205) de communication optique étant connecté au module de commande principal (101) et un deuxième module (206) de communication optique étant connecté au sous-module de commande (241), le sous-module de commande (241) étant utilisé pour capturer un signal de détection du circuit de détection (242) et pour envoyer le signal de détection au module de commande principal (101) par l'intermédiaire du premier module (205) de communication optique et du deuxième module (206) de communication optique.

8. Le robot culinaire selon l'une quelconque des revendications 1 à 7, **caractérisé en ce que** le module solaire (103) comprend une borne de sortie utilisée pour délivrer de l'énergie électrique et qui est connectée au circuit (104) de réception d'énergie, une unité (307) de stockage d'énergie étant connectée en parallèle à la borne de sortie du module solaire (103), l'unité (307) de stockage d'énergie étant connectée entre la borne de sortie du module solaire (103) et le circuit (104) de réception d'énergie.

9. Le robot culinaire selon la revendication 8, **caractérisé en ce qu'**une unité de conduction unidirectionnelle (308) est connectée en série entre le module solaire (103) et l'unité (307) de stockage d'énergie et a une direction de conduction qui est cohérente avec la direction du courant fourni par le module solaire (103) au circuit (104) de réception d'énergie.

10. Le robot culinaire selon l'une quelconque des revendications 1 à 9, **caractérisé en ce que** la source lumineuse (102) comprend une diode électroluminescente et/ou une lampe au tungstène.

11. Le robot culinaire selon l'une quelconque des revendications 1 à 10, **caractérisé en ce que** l'unité principale (11) comprend une fiche pour la connexion à une source d'alimentation externe.

12. Le robot culinaire selon l'une quelconque des revendications 1 à 11, **caractérisé en ce qu'**une lentille (207) est disposée entre la source lumineuse (102) et le module solaire (103).

13. Le robot culinaire selon la revendication 12, **caractérisé en ce que** la lentille (207) et la source lumineuse (102) sont prévues de façon indépendante et séparée, et la lentille (207) est montée au fond de l'ensemble bol (12) et/ou au sommet de l'unité principale (11) ;
ou la lentille (207) et la source lumineuse (102) sont fixées ensemble et assemblées ensemble au sommet de l'unité principale (11).

14. Le robot culinaire selon la revendication 12 ou la revendication 13, **caractérisé en ce que** la lentille (207) comprend une lentille convexe.

15. Le robot culinaire selon l'une quelconque des revendications 12 à 14, **caractérisé en ce que** la position du module solaire (103) est décalée d'un côté de la source lumineuse (102) et la lentille (207) est agencée pour changer la direction de la lumière émise par la source lumineuse (102) de façon à arriver à la surface de réception de lumière du module solaire (103).
